# EUROPEAN PATENT APPLICATION

(11) **EP 2 081 316 A1**
(43) Date of publication of application: **22.07.2009**
(21) Application number: 07767167.5
(22) Date of filing: 19.06.2007
(51) Int. Cl.: H04L 9/06

(54) **CRYPTOGRAPHIC CALCULATION PROCESSING CIRCUIT**

(30) Priority: 09.11.2006 JP 2006304068
(71) Applicant: Panasonic Corporation, Kadoma-shi Osaka 571-8501 (JP)
(72) Inventor: YOSHIMOTO, Tetsuro, Chuo-ku Osaka 540-6207 (JP); TANAKA, Takayuki, Chuo-ku, Osaka 540-6207 (JP)
(74) Representative: Grünecker, Kinkeldey, Stockmair & Schwanhäusser Anwaltssozietät
(86) International application number: PCT/JP2007/062293
(87) International publication number: WO 2008/056461

(57) **Abstract**

A dummy operation instruction circuit **(100)** is provided for issuing a dummy operation instruction **(113)** to a cryptographic control circuit **(101)** instead of a CPU **(109)** or the like after being notified of execution of a cryptographic operation instruction **(111)** from the CPU **(109)** or the like. By causing operation resources **(103** to **108),** such as a memory, an operator, a register and the like, after the execution of the cryptographic operation instruction **(111),** though they are normally inactivated for that period, so that a current is consumed, it is difficult to identify timing of the end, start and the like of a cryptographic operation process based on the magnitude of a consumed current. The dummy operation instruction **(113)** is issued only for a period of time for which the cryptographic operation instruction **(111)** is not issued from the CPU **(109)** or the like. Therefore, the performance of the cryptographic operation process is not deteriorated.

## Description

### TECHNICAL FIELD

The present invention relates to a cryptographic operation processing circuit, and more particularly, to a cryptographic operation processing circuit comprising a means for preventing analysis of secret data, such as an encryption key or the like.

### BACKGROUND ART

Recently, as electronic commerce, automatic ticket gates and the like that employ IC cards, mobile telephones with IC card functions or the like have been developed, it is important to secure the security of IC cards or the like.

However, methods have been found in which, by observing and analyzing power consumption (consumed current) when an IC card is performing a cryptographic operation process, an encryption key or details of the cryptographic operation process in the IC card are analyzed. Representative examples of such an analysis means include simple power analysis (SPA), in which variations in consumed current are directly used for analysis, differential power analysis (DPA), in which a secret encryption key is estimated by performing a statistical process with respect to observed data, and the like.

In order to address the conventional simple power analysis, there are known methods in which a dummy process for changing the timing of a cryptographic operation procedure is inserted in a normal process or a consumed current is changed on a time axis by changing an operation clock cycle. In these methods, the procedure or timing of a cryptographic operation process is changed every time it is performed, so that a consumed current waveform is changed as viewed on the time axis. Therefore, data-dependent analysis in which current waveforms are compared on the time axis is substantially disabled, thereby achieving security (see Patent Document 1).

In order to address the conventional differential power analysis, there is a known method in which a noise generating circuit superimposes a noise current onto a consumed current of a normal process. In this technique, even when the same operation is performed a plurality of times, resultant current waveforms differ from each other, thereby making it difficult to perform differential analysis to achieve security (see Patent Document 2).
Patent Document 1: Japanese Unexamined Patent Application Publication No. 2000-259799
Patent Document 2: Japanese Unexamined Patent Application Publication No. 2005-252705

### DISCLOSURE OF THE INVENTION

### PROBLEMS TO BE SOLVED BY THE INVENTION

If a dummy process for changing the timing of a cryptographic operation procedure is added to an excessively large extent so as to address simple power analysis, a time required to complete the execution of a cryptographic operation is caused to be long, so that the performance of a cryptographic operation process is significantly reduced. Conversely, if a dummy process for changing the timing of a cryptographic operation procedure is added to a small extent, a reduction in the performance of a cryptographic operation process is small. In this case, however, variations in current waveform of a normal cryptographic process are easily tapped from the outside.

In the case of the technique of changing a consumed current on a time axis by changing an operation clock cycle so as to address simple power analysis, information, such as a clock cycle or the like, is easily observed from the outside, and an observed current waveform can be analyzed and repaired into a current waveform having a constant clock cycle by a digital signal process.

In the case of the technique of superposing a noise current onto a consumed current of a normal process by a noise generating circuit so as to address differential power analysis, a physical position at which a current is consumed inside an LSI can be identified by a recent LSI analysis technique, such as liquid crystal analysis, light emission analysis or the like. With liquid crystal analysis, a change in current at a specific location can be observed as a change in transmittance of liquid crystal, so that current analysis can be performed.

### SOLUTION TO THE PROBLEMS

To solve the above-described problem, a cryptographic operation processing circuit according to the present invention comprises a memory for storing data for a cryptographic operation, an operator for operating the cryptographic operation data, a register for temporarily storing input/output data of the operator, a cryptographic control circuit for receiving a cryptographic operation instruction and controlling the memory, the operator and the register so as to perform a cryptographic process with respect to the cryptographic operation data, and a dummy operation instruction circuit for receiving an operation completion signal indicating that execution of the cryptographic operation instruction has been ended, and issuing a dummy operation instruction for operating the memory, the operator and the register to the cryptographic control circuit.

### EFFECT OF THE INVENTION

In the cryptographic operation processing circuit of the present invention, the dummy operation instruction circuit issues a dummy operation instruction for operating a memory, an operator or a register after execution of a cryptographic operation instruction from a CPU or the like, though they are normally inactivated for that period, so that the memory, the operator or the register is operated as in the case of a cryptographic operation instruction and a current is consumed. Therefore, it is difficult to identify timing of the end, start and the like of a cryptographic operation process based on the magnitude of a consumed current, resulting in an improvement in security. The dummy operation instruction is issued only for a period of time for which the cryptographic operation instruction is not issued from the CPU or the like, i.e., the issuance of the cryptographic operation instruction from the CPU or the like is not delayed. Therefore, the performance of the cryptographic operation process is not deteriorated.

### BRIEF DESCRIPTION OF THE DRAWINGS

FIG. **1** is a block diagram showing an exemplary configuration of a cryptographic operation processing circuit according to the present invention.
FIG. **2** is a timing diagram showing an operation of the cryptographic operation processing circuit of FIG. **1****.**
FIG. **3** is a timing diagram showing an operation when a dummy operation instruction circuit is not provided in the cryptographic operation processing circuit of FIG. **1****.**
FIG. **4** is a block diagram showing a detailed exemplary configuration of a dummy operation instruction circuit of FIG. **1****.**
FIG. **5** is a diagram showing exemplary contents stored in a cryptographic operation instruction storing circuit of FIG. **4****.**
FIG. **6** is a block diagram showing a detailed exemplary configuration of a cryptographic control circuit of FIG. **1****.**
FIG. **7** is a timing diagram showing an operation of a cryptographic operation processing circuit comprising the cryptographic control circuit of FIG. **6****.**
FIG. **8** is another timing diagram showing the operation of the cryptographic operation processing circuit comprising the cryptographic control circuit of FIG. **6****.**
FIG. **9** is still another timing diagram showing the operation of the cryptographic operation processing circuit comprising the cryptographic control circuit of FIG. **6****.**
FIG. **10** is still another timing diagram showing the operation of the cryptographic operation processing circuit comprising the cryptographic control circuit of FIG. **6****.**
FIG. **11** is a diagram showing FIGS. **7** to **10** together.
FIG. **12** is a block diagram showing a detailed exemplary configuration of a dummy control circuit of FIG. **6****.**
FIG. **13** is a diagram showing exemplary contents stored in a normal control signal storing circuit of FIG. **12****.**
FIG. **14** is a block diagram showing a variation of the cryptographic operation processing circuit of FIG. **1****.**
FIG. **15** is a diagram showing exemplary contents stored in a cryptographic operation instruction storing circuit of FIG. **14****.**
FIG. **16** is a diagram showing exemplary contents stored in a normal control signal storing circuit of FIG. **14****.**
FIG. **17** is a block diagram showing a configuration of a cryptographic control circuit and an operation section according to a variation of FIG. **6****.**
FIG. **18** is a timing diagram showing an operation of a cryptographic operation processing circuit comprising the cryptographic control circuit and the operation section of FIG. **17****.**
FIG. **19** is a block diagram showing a configuration of an operation section according to a variation of FIG. **17****.**
FIG. **20** is a timing diagram showing an operation of a cryptographic operation processing circuit comprising the operation section of FIG. **19****.**

### DESCRIPTION OF THE REFERENCE CHARACTERS

- **100**: dummy operation instruction circuit
- **101**: cryptographic control circuit
- **102**: operation section
- **103**: memory A
- **104**: memory B
- **105**: operator
- **106**: register A
- **107**: register B
- **108**: register C
- **109**: CPU
- **110**: clock
- **111**: cryptographic operation instruction
- **112**: cryptographic operation completion signal
- **113**: dummy operation instruction
- **114**: operation completion signal
- **115**: memory A control signal
- **116**: register A control signal
- **117**: register B control signal
- **118**: operator control signal
- **119**: register C control signal
- **120**: memory B control signal
- **121**: memory A output data
- **122**: register A output data
- **123**: register B output data
- **124**: operator output data
- **125**: register C output data
- **400**: cryptographic operation instruction storing circuit
- **401**: dummy operation instruction generating circuit
- **402**: cryptographic operation instruction history information
- **600**: operation status notification circuit
- **601**: normal control circuit
- **602**: dummy control circuit
- **603**: selector
- **604**: normal control circuit memory A control signal
- **605**: normal control circuit register A control signal
- **606**: normal control circuit register B control signal
- **607**: normal control circuit operator control signal
- **608**: normal control circuit register C control signal
- **609**: normal control circuit memory B control signal
- **610**: dummy control circuit memory A control signal
- **611**: dummy control circuit register A control signal
- **612**: dummy control circuit register B control signal
- **613**: dummy control circuit operator control signal
- **614**: dummy control circuit register C control signal
- **615**: dummy control circuit memory B control signal
- **616**: operation status notification signal
- **800**: normal control signal storing circuit
- **801**: dummy control signal generating circuit
- **802**: normal control signal history information
- **1000**: bit value-0 count circuit
- **1001**: bit value-0 count information
- **1300**: preset circuit A
- **1301**: preset circuit B
- **1302**: preset circuit A control signal
- **1303**: preset circuit B control signal
- **1304**: preset circuit A output data
- **1305**: preset circuit B output data
- **1306**: pulse signal generating circuit
- **1500**: delay circuit A
- **1501**: delay circuit B
- **1502**: delay circuit A output data
- **1503**: delay circuit B output data

### BEST MODE FOR CARRYING OUT THE INVENTION

Hereinafter, a best mode for carrying out the present invention will be described with reference to the accompanying drawings. Note that the same or like parts are indicated by the same reference numerals and will not be repeatedly described.

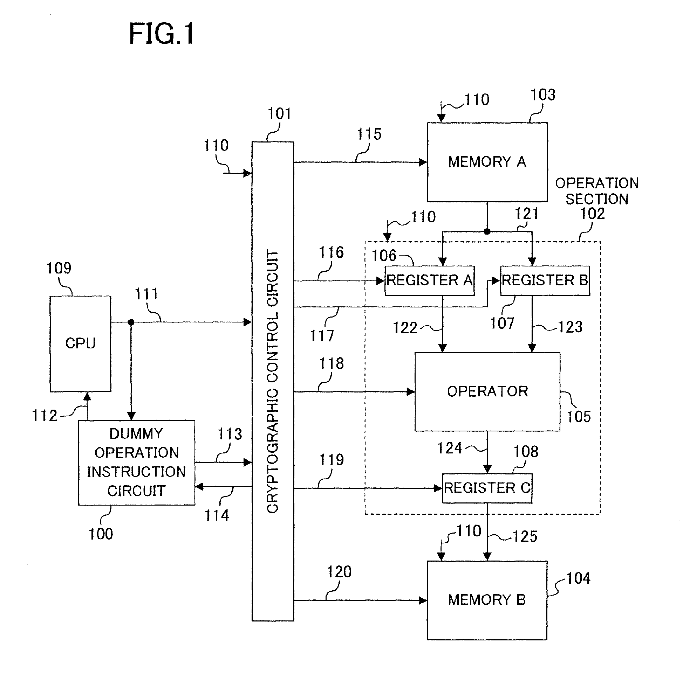

FIG. 1 shows an exemplary configuration of a cryptographic operation processing circuit according to the present invention. The cryptographic operation processing circuit of FIG. **1** comprises a dummy operation instruction circuit **100,** a cryptographic control circuit **101,** an operation section **102,** a memory A **103,** and a memory B **104.** The operation section **102** comprises an operator **105,** a register A **106,** a register B **107,** and a register C **108.**

The dummy operation instruction circuit **100** recognizes that a cryptographic operation is started, based on a cryptographic operation instruction **111** output from a CPU **109,** and thereafter, receives an operation completion signal **114** indicating that the execution of the cryptographic operation instruction **111** has been ended, and outputs a cryptographic operation completion signal **112** to the CPU **109** and issues a dummy operation instruction **113** to the cryptographic control circuit **101.** Thereafter, the dummy operation instruction circuit **100,** when receiving the operation completion signal **114** also indicating that the execution of the dummy operation instruction **113** has been ended and recognizing that a dummy operation has been completed, issues the dummy operation instruction **113** again. The issuance of the dummy operation instruction **113** is repeated until the cryptographic operation instruction **111** is newly issued from the CPU **109.**

The cryptographic control circuit **101** receives the cryptographic operation instruction **111** from the CPU **109** or the dummy operation instruction **113** from the dummy operation instruction circuit **100,** and outputs a memory A control signal **115,** a memory B control signal **120,** an operator control signal **118,** a register A control signal **116,** a register B control signal **117,** and a register C control signal **119** so as to control the memory A **103,** the memory B **104,** the operator **105,** the register A **106,** the register B **107,** and the register C **108.** Also, the cryptographic control circuit **101,** when the execution of the cryptographic operation instruction **111** or the dummy operation instruction **113** has been ended, outputs the operation completion signal **114.** When the cryptographic operation instruction **111** is issued from the CPU **109** during the execution of a process of the dummy operation instruction **113,** a control by the dummy operation instruction **113** is forcedly ended, and a process of the cryptographic operation instruction **111** is started.

The memory A **103** is, for example, a memory that is in synchronization with a falling edge of a clock **110** and outputs memory A output data **121** from an address indicated by the memory A control signal **115** from the cryptographic control circuit **101.**

The memory B **104** is, for example, a memory that is in synchronization with a falling edge of the clock **110** and writes register C output data **125** to an address indicated by the memory B control signal **120** from the cryptographic control circuit **101.**

The operator **105** is a combinational circuit that receives register A output data **122** and register B output data **123,** performs an operation in accordance with the operator control signal **118,** and outputs the result to operator output data **124.**

The register A **106** receives the memory A output data **121,** and when the register A control signal **116** from the cryptographic control circuit **101** is effective, holds and outputs the memory A output data **121** to the register A output data **122.**

The register B **107** receives the memory A output data **121,** and when the register B control signal **117** from the cryptographic control circuit **101** is effective, holds and outputs the memory A output data **121** to the register B output data **123.**

The register C **108** receives the operator output data **124,** and when the register C control signal **119** from the cryptographic control circuit **101** is effective, holds and outputs the operator output data **124** to the register C output data **125.**

The CPU **109** issues the cryptographic operation instruction **111** to the cryptographic control circuit **101** to cause the cryptographic control circuit **101** to perform a cryptographic operation process, and also receives the cryptographic operation completion signal **112** from the dummy operation instruction circuit **100** to recognize the end of a cryptographic operation process.

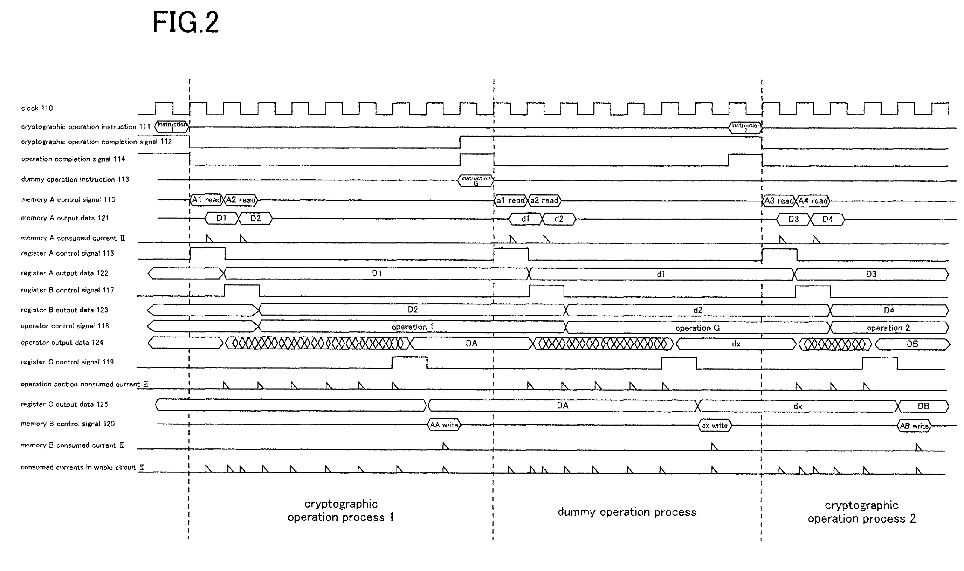

FIG. **2** shows an operation of the cryptographic operation processing circuit of FIG. **1****.** Here, as an example, it is assumed that the cryptographic operation instruction **111** called instruction 1 is initially issued from the CPU **109.**

The cryptographic control circuit **101** decodes instruction 1 to read data D1 and data D2 from address A1 and address A2 of the memory A **103,** and inputs data D1 to the register A 106 and data D2 to the register B **107.** A memory A consumed current II is a consumed current caused by the memory A **103** performing a read operation and has a consumed current waveform corresponding to a read operation of address A1 and address A2.

The cryptographic control circuit **101** decodes instruction 1 to output operation 1 as the operator control signal **118.** In this example, operation 1 is assumed to be an instruction that requires at least five clock cycles until an output result is settled. The operator **105** operates output D1 of the register A output data **122** and output D2 of the register B output data **123,** and after three clock cycles, outputs DA as the operator output data **124.** An operation section consumed current II is changed every time data is input to the register A **106** and the register B **107** that are input registers for the operator **105** that is a combinational circuit, and is consumed for three clock cycles even after values of the register A **106** and the register B **107** are settled, since an operation is executed for that period of time.

The cryptographic control circuit **101** decodes instruction 1 and outputs the register C control signal **119** for inputting an operation result to the register C **108** with timing when operation 1 is ended, so that DA is stored to the register C **108.** Thereafter, the cryptographic control circuit **101** decodes instruction 1 and issues the memory B control signal **120,** so that DA that is the register C output data **125** is stored into address AA of the memory B **104.** A memory B consumed current II is a consumed current caused by a write operation to the memory B **104,** and has a consumed current waveform corresponding to a write operation to address AA.

Thereafter, the cryptographic control circuit **101** outputs the operation completion signal **114** indicating the end of the execution of instruction 1 from the CPU **109,** to the dummy operation instruction circuit **100.**

The dummy operation instruction circuit **100** recognizes that a cryptographic operation for instruction 1 has been started, based on the cryptographic operation instruction **111** output from the CPU **109,** and thereafter, receives the operation completion signal **114** that is a signal indicating the end of instruction 1, and outputs the cryptographic operation completion signal **112** to the CPU **109.** A period of time from the start to the end of the cryptographic operation of instruction 1 is hereinafter defined as a "cryptographic operation process 1" period.

In the CPU **109,** several tens of clock cycles are required as a program processing period so as to issue instruction 2 that is a new cryptographic operation instruction **111** after receiving the cryptographic operation completion signal **112.** Note that, in FIG. 2, an example is shown in which instruction 2 is issued eight clocks after reception of the cryptographic operation completion signal **112** with respect to instruction 1.

The dummy operation instruction circuit **100** issues instruction G as the dummy operation instruction **113** to the cryptographic control circuit **101.** It is here assumed that instruction G is an instruction that is fixedly output from the dummy operation instruction circuit **100,** and with which data d1 and data d2 are read out from address a1 and address a2 of the memory A **103,** respectively, data d1 and data d2 are stored into the register A **106** and the register B **107,** respectively, a required operation is performed in the operator **105** for two clock cycles until an output result is settled, dx is stored as an operation result into the register C **108,** dx is stored at address ax of the memory B **104,** and thereafter, the operation completion signal **114** is output to the dummy operation instruction circuit **100,** and a process of instruction G is thus completed. Note that address ax at which data is stored by the memory B control signal **120** needs not to destroy a memory space that is used by the cryptographic operation instruction **111** or the like, and therefore, an address that is not used by the CPU **109** is used as an address for storing data.

In accordance with the operation completion signal **114** indicating that the execution of the dummy operation instruction **113** has been ended, the dummy operation instruction circuit **100** repeatedly issues the dummy operation instruction **113** until the cryptographic operation instruction **111** is newly issued from the CPU **109.** In the example of FIG. **2****,** however, instruction 2 that is a new cryptographic operation instruction **111** is issued from the CPU **109** with the same timing, so that the issuance of the dummy operation instruction **113** is interrupted. A period of time from the start to the end of execution of the dummy operation instruction **113** is hereinafter defined as a "dummy operation process" period.

In FIG. **2****,** a consumed current waveform of the whole cryptographic operation processing circuit of FIG. **1** is an addition of the memory A consumed current II, the operation section consumed current II, and the memory B consumed current II, i.e., a consumed current waveform obtained by summing "consumed currents II in whole circuit". In FIG. **2****,** the consumed currents II in whole circuit have substantially a continuous consumed current waveform over the "cryptographic operation process 1" period and the "dummy operation process" period.

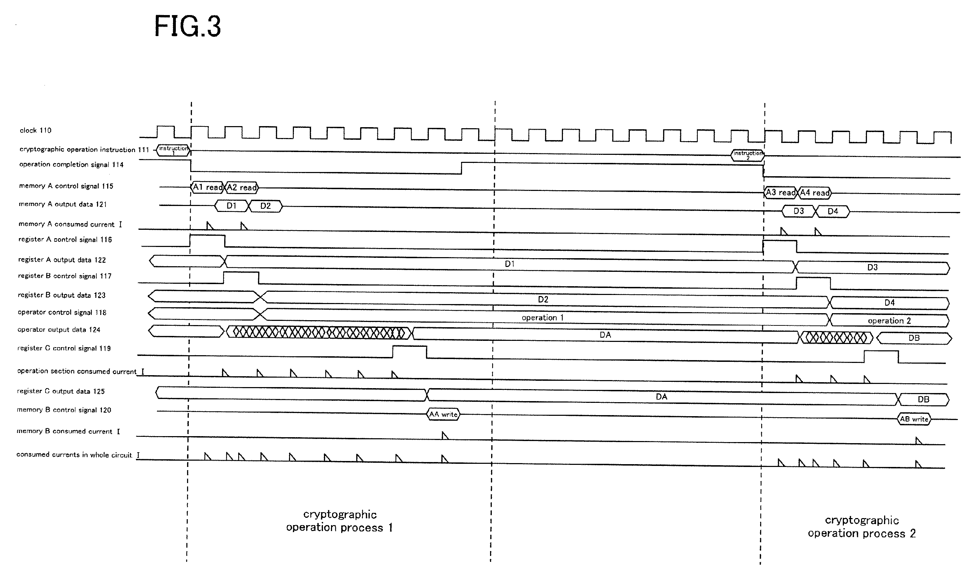

FIG. **3** shows an operation when the dummy operation instruction circuit **100** that is a component of the present invention is not provided in the cryptographic operation processing circuit of FIG. **1****.** In FIG. 3, the cryptographic operation processing circuit is not operated for a clock cycle period that corresponds to the "dummy operation process" period of FIG. 2, and therefore, that period is a period for which the consumed currents II in whole circuit have a continuous LOW-level waveform, so that the timing of the end and start of execution of an instruction can be revealed based on a change in consumed current waveform.

As described above, in the cryptographic operation processing circuit of FIG. **1****,** the dummy operation instruction circuit **100** issues the dummy operation instruction **113** for operating the memory A **103,** the memory B **104,** the operator 105, the register A **106,** the register B **107,** or the register C **108,** which are normally inactivated, after the end of execution of the cryptographic operation instruction **111** from the CPU **109** or the like, so that the memory A **103,** the memory B **104,** the operator **105,** the register A **106,** the register B **107,** or the register C **108** is operated and consumes a current as in the case where the cryptographic operation instruction **111** is issued. Therefore, it is difficult to identify the timing of the end, the start and the like of a cryptographic operation process based on the magnitude or the like of a consumed current, resulting in an improvement in security.

Further, the dummy operation instruction **113** is issued only for a period of time for which the cryptographic operation instruction **111** from the CPU **109** or the like is not issued. Thus, since the issuance of the cryptographic operation instruction **111** from the CPU **109** or the like is not delayed, the performance of the cryptographic operation process is not deteriorated.

Although it has been assumed above that the dummy operation instruction **113** is fixed and invariably the same, the same instruction as the cryptographic operation instruction **111** immediately previously issued from the CPU **109** may be issued as the dummy operation instruction **113.** Thereby, even when the execution of the cryptographic operation instruction **111** is ended, the dummy operation instruction **113** having the same consumed current waveform is executed, so that it is difficult to analyze the timing of the end of execution of the cryptographic operation instruction **111,** resulting in a further improvement in security against current analysis.

Note that the memory A **103** and the memory B **104** may be the same memory. Further, the operator **105** may have three or more inputs, and three or more registers for holding the input data may be provided. Further, the operator **105** may be comprised of a plurality of operational elements, such as an adder, a multiplier, and the like.

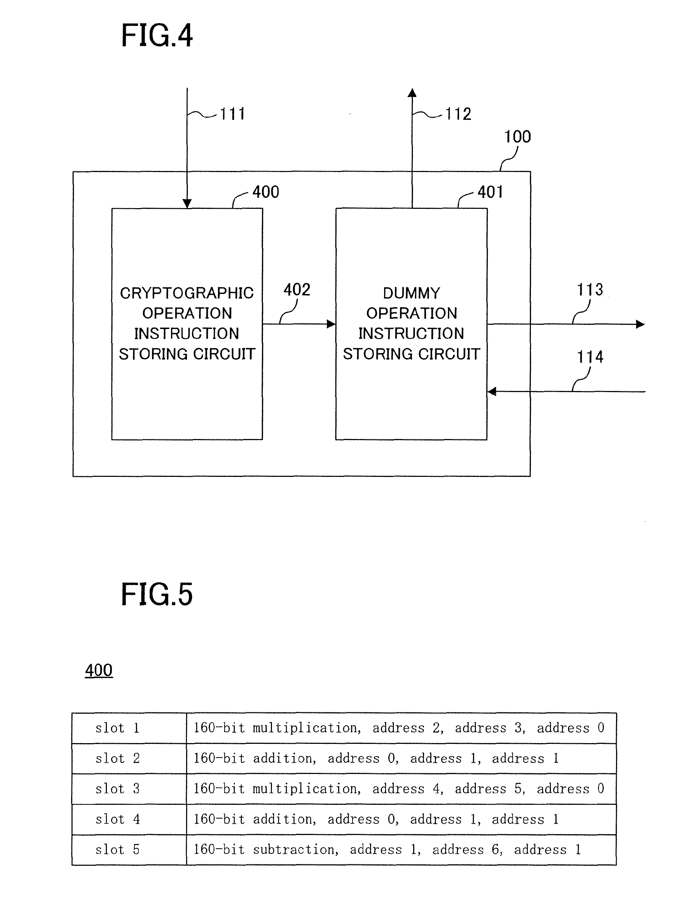

FIG. **4** shows a detailed exemplary configuration of the dummy operation instruction circuit **100** of FIG. **1****.** The dummy operation instruction circuit **100** of FIG. **4** comprises a cryptographic operation instruction storing circuit **400** for storing the cryptographic operation instruction **111** from the CPU **109,** and a dummy operation instruction generating circuit **401** for generating the dummy operation instruction **113** from a past cryptographic operation instruction history.

The cryptographic operation instruction storing circuit **400** stores the cryptographic operation instruction **111** output by the CPU **109** as cryptographic operation instruction history information **402.**

The dummy operation instruction generating circuit **401** receives the operation completion signal **114** that is a signal indicating the end of execution of the cryptographic operation instruction **111,** and generates the dummy operation instruction **113** based on the cryptographic operation instruction history information **402** output from the cryptographic operation instruction storing circuit **400.**

FIG. **5** shows exemplary contents stored in the cryptographic operation instruction storing circuit **400** of FIG. **4****.** As shown in FIG. **5****,** the cryptographic operation instruction storing circuit **400** stores a plurality of cryptographic operation instructions **111** issued in the past, in a FIFO (FIRST-IN FIRST-OUT) including a RAM. A FIFO address at which a cryptographic operation instruction **111** is stored is hereinafter referred to as a slot.

In FIG. **5****,** five slots are provided. Past cryptographic operation instructions **111** are stored into the slots, starting from slot 1. When the slots are full, a cryptographic operation instructions **111** are discarded from slot 5. Here, in slot 1, an instruction for multiplication where data of 160 bits in length is input from each of address 2 and address 3 and the result is output to address 0, is stored. In slot 2, an instruction for addition where data of 160 bits in length is input from each of address 0 and address 1 and the result is output to address 1, is stored. In slot 3, an instruction for multiplication where data of 160 bits in length is input from each of address 4 and address 5 and the result is output to address 0, is stored. In slot 4, an instruction for addition where data of 160 bits in length is input from each of address 0 and address 1 and the result is output to address 1, is stored. In slot 5, an instruction for subtraction where data of 160 bits in length is input from each of address 1 and address 6 and the result is output to address 1, is stored.

The dummy operation instruction generating circuit **401** receives the operation completion signal **114** that is a signal indicating that the execution of the cryptographic operation instruction **111** has been ended, and scans the cryptographic operation instructions **111** stored in slot 1 to slot 5 to recognize that there are two multiplications where 160 bits are input, two additions where 160 bits are input, and one subtraction where 160 bits are input. The multiplications and the additions have the same frequency of occurrence (the number of times). In slot 1 that has been issued at the latest, a multiplication is stored. Therefore, an addition is selected, i.e., slot 4 is selected, so that based on the cryptographic operation instruction **111** of slot 4, the dummy operation instruction **113** is generated in which an addition where data of 160 bits in length is input from each of address 0 and address 1 and the result is output to address AX, is performed. Address AX for storing data needs not to destroy a memory space that is used by the cryptographic operation instruction **111** or the like, and therefore, an address that is not used by the CPU **109** is used as the data storing address.

As described above, in the configuration of FIG. **4****,** cryptographic operation instructions **111** successively issued from the CPU **109** are stored into a RAM or the like, and from the stored cryptographic operation instructions **111,** a cryptographic operation instruction **111** having a high frequency of occurrence is selected and issued as the dummy operation instruction **113.** Therefore, even when current analysis is performed, it is difficult to distinguish the execution of successively issued cryptographic operation instructions **111** from the execution of a cryptographic operation instruction **111** having a high frequency of occurrence as the dummy operation instruction **113,** resulting in a further improvement in security against current analysis.

Note that the dummy operation instruction generating circuit **401** may randomly select a cryptographic operation instruction **111** from the stored cryptographic operation instructions **111** and issue it as the dummy operation instruction **113.** Thereby, even when current analysis is performed, it is difficult to distinguish the execution of successively issued cryptographic operation instructions **111** from the execution of a past cryptographic operation instructions **111** randomly selected as the dummy operation instruction 113, resulting in a further improvement in security against current analysis.

Also, the cryptographic operation instruction storing circuit **400** may be comprised of a non-volatile memory. Thereby, cryptographic operation instructions **111** successively issued from the CPU **109** or the like are stored in the non-volatile memory. Therefore, a history of past cryptographic operation instructions **111** can be stored after power-off, and a cryptographic operation instruction **111** is selected from the stored cryptographic operation instructions **111** and is issued as the dummy operation instruction **113.** Therefore, even in the case of a current analysis technique in which, for example, a sequence of power-on, execution of a cryptographic operation, and power-off is repeatedly execute to observe changes in current waveform, it is difficult to distinguish the execution of a cryptographic operation instruction **111** from the execution of a past cryptographic operation instruction **111** as the dummy operation instruction **113,** resulting in a further improvement in security against current analysis.

Although it has been assumed above that the number of slots in the cryptographic operation instruction storing circuit **400** is five, the number of slots may be increased or decreased.

A period of time for which the memories **103** and **104,** the operator **105,** and the registers **106, 107** and **108** are inactivated exists in some clock cycle units even when a cryptographic operation instruction **111** from the CPU **109** or the like is being executed. Also, even when the dummy operation instruction **113** is being executed, a period of time for which the memories **103** and **104,** the operator **105,** and the registers **106, 107** and **108** are inactivated exists in some clock cycle units. In view of this, in the following example, the operational resources **103** to **108** are invariably operated to consume a current, resulting in a further improvement in security against current analysis.

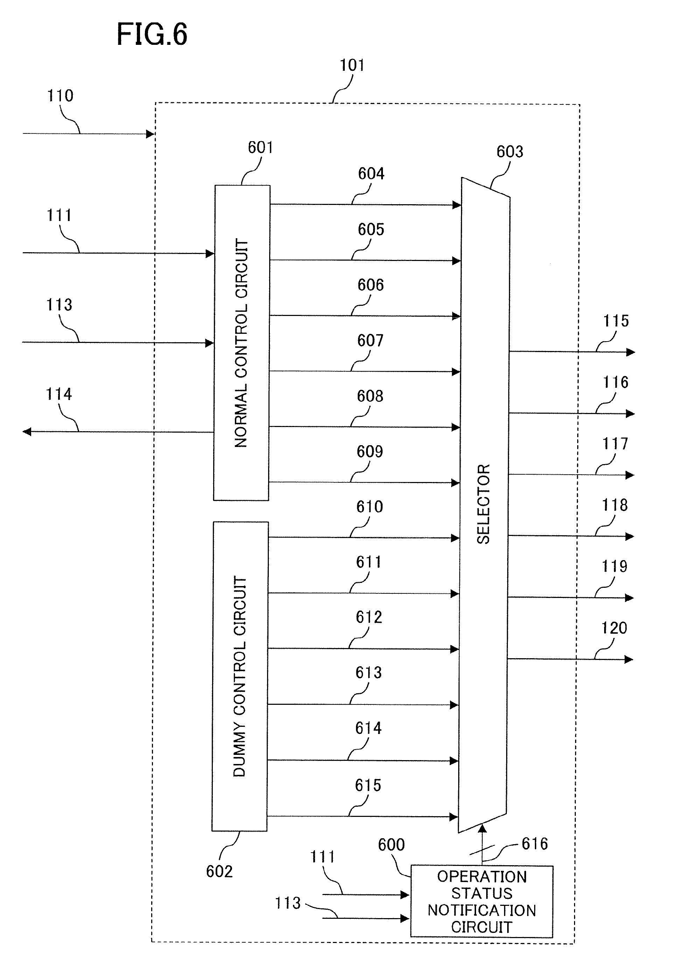

FIG. **6** shows a detailed exemplary configuration of the cryptographic control circuit **101** of FIG. **1****.** The cryptographic control circuit **101** of FIG. **6** comprises an operation status notification circuit **600,** a normal control circuit **601,** a dummy control circuit **602,** and a selector **603.**

The normal control circuit **601** receives the cryptographic operation instruction **111** or the dummy operation instruction **113,** and outputs to the selector **603** a normal control circuit memory A control signal **604,** a normal control circuit register A control signal **605,** a normal control circuit register B control signal **606,** a normal control circuit operator control signal **607,** a normal control circuit register C control signal **608,** and a normal control circuit memory B control signal **609** (these control signals are hereinafter referred to as normal control signals). Further, when a control by the cryptographic operation instruction **111** or the dummy operation instruction **113** has been ended, the normal control circuit **601** outputs the operation completion signal **114** to the dummy operation instruction circuit **100.**

The dummy control circuit **602** outputs to the selector **603** a dummy control circuit memory A control signal **610,** a dummy control circuit register A control signal **611,** a dummy control circuit register B control signal **612,** a dummy control circuit operator control signal **613,** a dummy control circuit register C control signal **614,** and a dummy control circuit memory B control signal **615** (these control signals are hereinafter referred to as dummy control signals).

The operation status notification circuit **600** outputs to the selector **603** a 6-bit operation status notification signal [5: 0] **616** indicating a clock cycle period for which the normal control signal from the normal control circuit **601** does not need to occupy the memory A **103,** the memory B **104,** the operator **105,** the register A **106,** the register B **107,** or the register C **108** even when the cryptographic operation instruction **111** or the dummy operation instruction **113** is being executed.

Based on the operation status notification signal [5:0] **616,** the selector **603** selects the memory A control signal **115** from the normal control circuit memory A control signal **604** or the dummy control circuit memory A control signal **610** using an operation status notification signal [0], the register A control signal **116** from the normal control circuit register A control signal **605** or the dummy control circuit register A control signal **611** using an operation status notification signal [1], the register B control signal **117** from the normal control circuit register B control signal **606** or the dummy control circuit register B control signal **612** using an operation status notification signal [2], the operator control signal **118** from the normal control circuit operator control signal **607** or the dummy control circuit operator control signal **613** using an operation status notification signal [3], the register C control signal **119** from the normal control circuit register C control signal **608** or the dummy control circuit register C control signal **614** using an operation status notification signal [4], and the memory B control signal **120** from the normal control circuit memory B control signal **609** or the dummy control circuit memory B control signal **615** using an operation status notification signal [5].

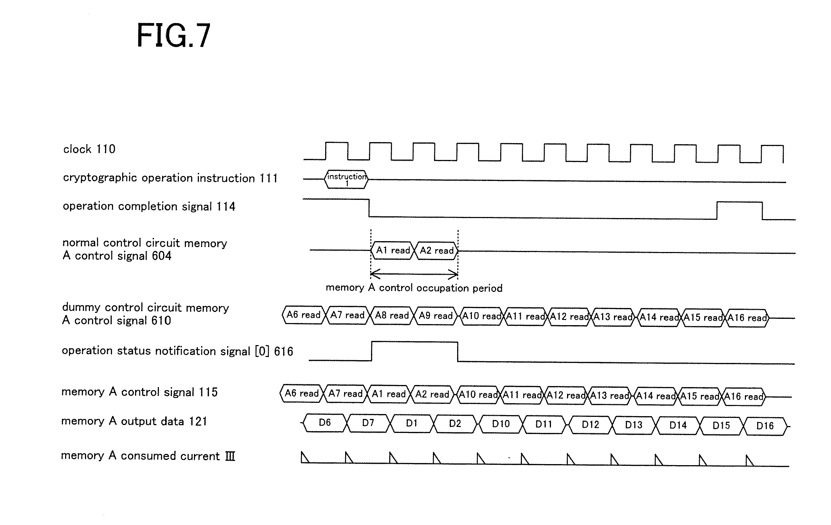

Next, an operation of the thus-configured cryptographic operation processing circuit will be described with reference to FIGS. **7** to **11****.** Note that, in FIGS. **7** to **10****,** periods of time for which the control signals from the cryptographic control circuit **101** occupy the memory A **103,** the memory B **104,** the operator **105,** the register A **106,** the register B **107,** and the register C **108** so as to correctly execute the cryptographic operation instruction **111,** are indicated as a "memory A control occupation period", a "memory B control occupation period", an "operator control occupation period", a "register A control occupation period", a "register B control occupation period", and a "register C control occupation period", respectively.

FIG. 7 shows an example in which the memory A control signal **115** is selected from the normal control circuit memory A control signal **604** or the dummy control circuit memory A control signal **610** based on the operation status notification signal [0] **616** from the operation status notification circuit **600.**

The operation status notification signal [0] **616** is such that, as a result of decoding of the cryptographic operation instruction **111,** the normal control circuit memory A control signal **604** is selected for two clock cycles, and the dummy control circuit memory A control signal **610** is selected for the other clock cycles. The normal control circuit memory A control signal **604** is a read signal for address A1 and address A2, and the dummy control circuit memory A control signal **610** outputs read signals for address A6 to address A 16 that are incremented every clock.

The selector **603** outputs the memory A control signal **115** that accesses the memory A **103** every clock cycle from the normal control circuit memory A control signal **604** or the dummy control circuit memory A control signal **610** based on the operation status notification signal [0] **616.** In accordance with the memory A control signal **115,** the memory A output data **121** is read out from the memory A **103,** and as a result, a consumed current waveform that consumes a current every clock cycle, such as a memory A consumed current III, is obtained.

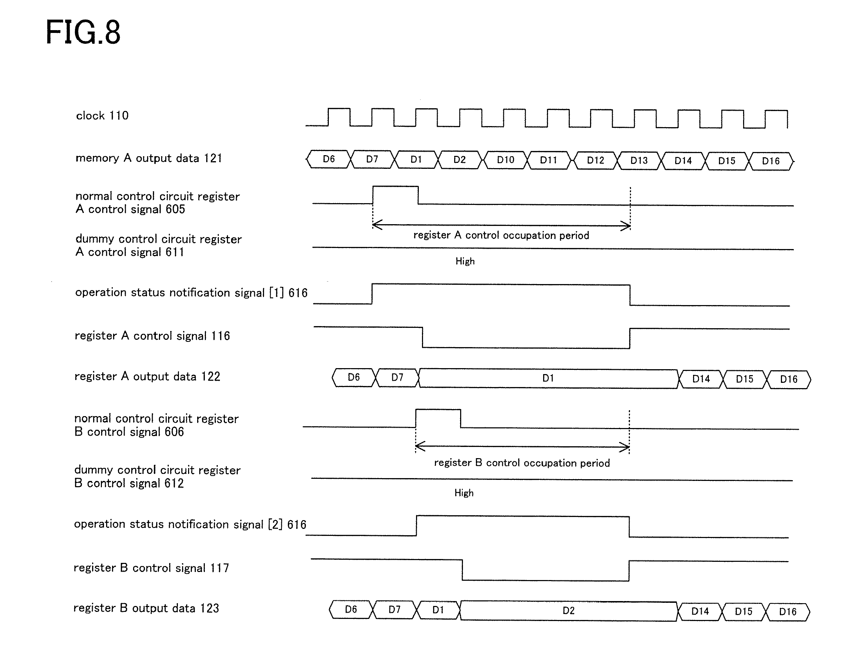

FIG. **8** shows an example in which, based on the operation status notification signal [1] **616** from the operation status notification circuit **600,** the register A control signal **116** is selected from the normal control circuit register A control signal 605 or the dummy control circuit register A control signal **611,** and based on the operation status notification signal [2] **616,** the register B control signal **117** is selected from the normal control circuit register B control signal **606** or the dummy control circuit register B control signal **612.**

The operation status notification signal [1] **616** is such that, as a result of decoding of the cryptographic operation instruction **111,** the normal control circuit register A control signal **605** is selected for six clock cycles, and the dummy control circuit register A control signal **611** is selected for the other clock cycles. The normal control circuit register A control signal **605** is a signal for storing value D1 from the memory A output data **121** into the register A **106.** The dummy control circuit register A control signal **611** outputs a signal that is invariably at a High level so as to input the memory A output data **121** to the register A **106** every clock cycle.

The operation status notification signal [2] **616** is such that, as a result of decoding of the cryptographic operation instruction **111,** the normal control circuit register B control signal **606** is selected for five clock cycles, and the dummy control circuit register B control signal **612** is selected for the other clock cycles. The normal control circuit register B control signal **606** is a signal for storing value D2 from the memory A output data **121** into the register B **107.** The dummy control circuit register B control signal **612** outputs a signal that is invariably at a High level so as to input the memory A output data **121** to the register B **107** every clock cycle.

Based on the operation status notification signal [1] **616,** the selector **603** outputs the register A control signal **116** so that data D6, data D7, data D1, data D14, data D 15, and data D16 from the memory A output data **121** are input to the register A **106.** Also, based on the operation status notification signal [2] **616,** the selector **603** outputs the register B control signal **117** so that data D6, data D7, data D1, data D2, data D14, data D15, data D16 from the memory A output data **121** are input to the register B **107.**

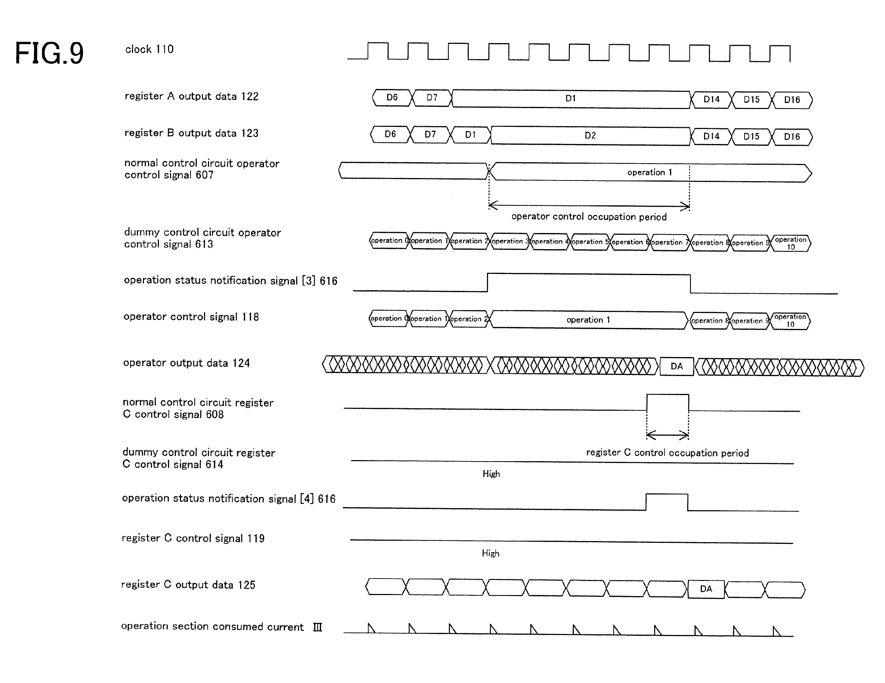

FIG. **9** shows an example in which, based on the operation status notification signal [3] **616** from the operation status notification circuit **600,** the operator control signal **118** is selected from the normal control circuit operator control signal **607** or the dummy control circuit operator control signal **613,** and based on the operation status notification signal [4] **616,** the register C control signal **119** is selected from the normal control circuit register C control signal **608** or the dummy control circuit register C control signal **614.**

The operation status notification signal [3] **616** is such that, as a result of decoding of the cryptographic operation instruction **111,** the normal control circuit operator control signal **607** is selected for five clock cycles, and the dummy control circuit operator control signal **613** is selected for the other clock cycles. The normal control circuit operator control signal **607** is a signal for causing the operator **105** to execute operation 1 where value D1 from the register A output data **122** and value D2 from the register B output data **123** are input. The dummy control circuit operator control signal **613** is a signal for causing the operator **105** to operate where the register A output data **122** and the register B output data **123** are input. In this example, a signal for executing each of operation 0 to operation 10 in units of a clock cycle is output.

The operation status notification signal [4] **616** is such that, as a result of decoding of the cryptographic operation instruction **111,** the normal control circuit register C control signal **608** is selected for one clock cycle, and the dummy control circuit register C control signal **614** is selected for the other clock cycles. The normal control circuit register C control signal **608** is a signal for storing value DA that is a result of an operation from the operator output data **124** into the register C **108.** The dummy control circuit register C control signal **614** outputs a signal that is invariably at a High level so as to input the operator output data **124** to the register C **108** every clock cycle.

Based on the operation status notification signal [3] **616,** the selector **603** outputs the operator control signal **118** for causing the operator **105** to execute operation 0, operation 1, operation 2, operation 1, operation 8, operation 9, and operation 10 where the memory A output data **122** and the memory B output data **123** are input to the operator **105.** Also, based on the operation status notification signal [4] **616,** the selector **603** outputs the register C control signal **119** for inputting the operator output data **124** to the register C **108** every clock cycle. By the operator control signal **118** and the register C control signal **119,** an operation is executed in the operator **105** every clock cycle, and a result of the operation is stored into the register C **108,** so that a consumed current waveform in which a current is consumed every clock cycle, such as an operation section consumed current III, is obtained.

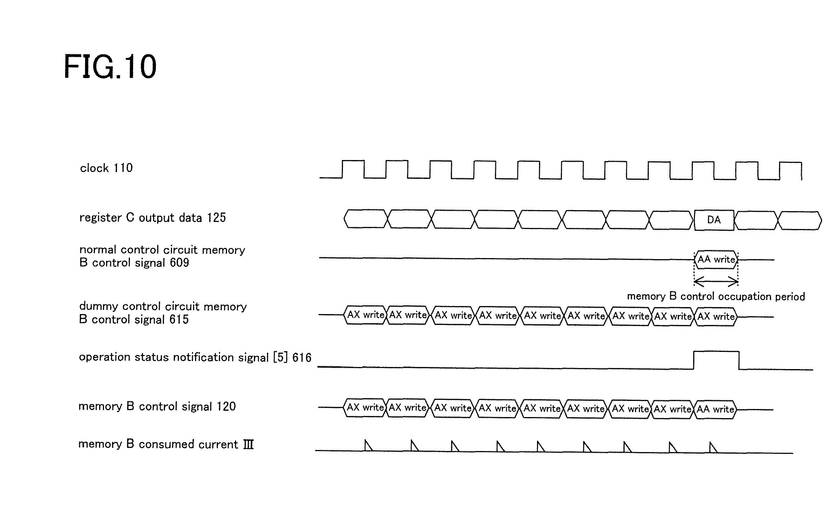

FIG. **10** shows an example in which, based on the operation status notification signal [5] **616** from the operation status notification circuit **600,** the memory B control signal **120** is selected from the normal control circuit memory B control signal **609** or the dummy control circuit memory B control signal **615.**

The operation status notification signal [5] **616** is such that, as a result of decoding of the cryptographic operation instruction **111,** the normal control circuit memory B control signal **609** is selected for one clock cycle, and the dummy control circuit memory B control signal **615** is selected for the other clock cycles. The normal control circuit memory B control signal **609** is a signal for writing the register C output data value DA to address AA of the memory B **104.** The dummy control circuit memory B control signal **615** is a signal for writing the register C output data **125** to the fixed address AX of memory B **104** every clock. Regarding the write operation to the memory B **104** in accordance with the dummy control circuit memory B control signal **615,** data required for the cryptographic operation instruction **111** or the like is likely to be overwritten at some addresses, and therefore, address AX that is not used by the CPU **109** is used as an address for storing data.

Based on the operation status notification signal [5] **616,** the selector **603** outputs the memory B control signal **120** in accordance with which write is performed from the normal control circuit memory B control signal **609** or the dummy control circuit memory B control signal **615** to the memory B **104** every clock cycle. In accordance with the memory B control signal **120,** the register C output data **125** is written to the memory B **104,** and as a result, a consumed current waveform in which a current is consumed every clock cycle, such as the memory B consumed current III, is obtained.

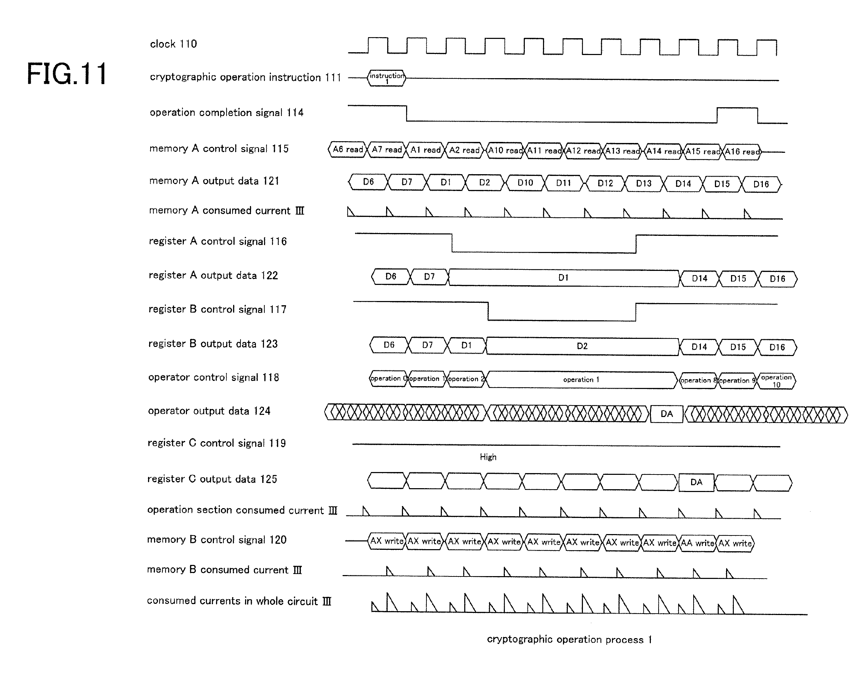

FIG. **11** is a diagram showing FIGS. **7** to **10** together. In FIG. **11****,** a consumed current waveform in the cryptographic operation processing circuit is an addition of the memory A consumed current III, the operation section consumed current III, and the memory B consumed current III. "Consumed currents III in whole circuit" indicate a total consumed current waveform. The consumed currents III in whole circuit have a more continuous consumed current waveform than that for the "cryptographic operation process 1" period of the consumed currents II in whole circuit of FIG. **2****.**

Although the operation of the cryptographic control circuit **101** during the execution of the cryptographic operation instruction **111** has been described with reference to FIGS. **7** to **11****,** the cryptographic control circuit **101** is similarly operated in the case of the dummy operation instruction **113.**

As described above, the configuration of FIG. **6** comprises the normal control circuit **601** for generating the normal control signals **604** to **609** for executing the cryptographic operation instruction **111** or the dummy operation instruction **113,** the operation status notification circuit **600** for indicating a clock cycle period for which the normal control circuit **601** does not need to occupy the memory A **103,** the memory B **104,** the operator **105,** the register A **106,** the register B **107,** or the register C **108** even when the cryptographic operation instruction **111** or the dummy operation instruction **113** is being executed, the dummy control circuit **602** for generating the dummy control signals **610** to **615** for forcefully operating the memory A **103,** the memory B **104,** the operator **105,** the register A **106,** the register B **107,** or the register C **108,** and the selector **603** for switching the normal control signals **604** to **609** and the dummy control signals **610** to **615,** depending on a notification from the operation status notification circuit **600.** Therefore, by switching a control from the normal control circuit **601** to the dummy control circuit **602** for a period of time for which the normal control circuit **601** does not need to occupy the memory A **103,** the memory B **104,** the operator **105,** the register A **106,** the register B **107,** or the register C **108,** the memory A **103,** the memory B **104,** the operator **105,** the register A **106,** the register B **107,** or the register C **108** can be invariably operated to consume a current, so that a more uniform consumed current is obtained even when the cryptographic operation instruction **111** or the dummy operation instruction **113** is being executed, resulting in a further improvement in security against current analysis.

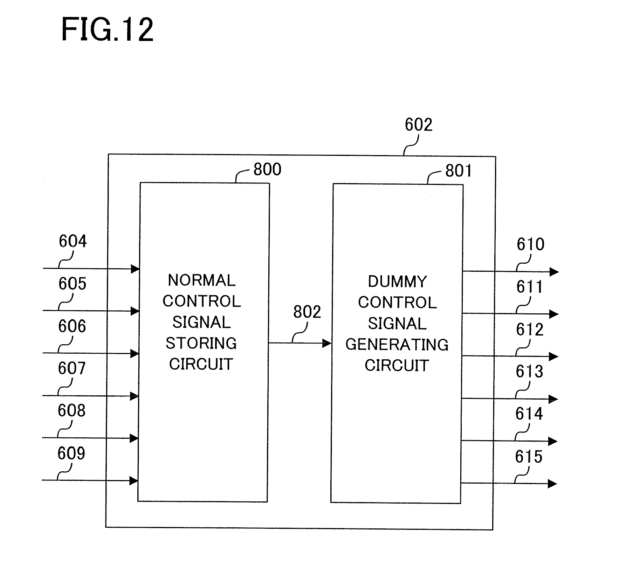

FIG. **12** shows a detailed exemplary configuration of the dummy control circuit **602** of FIG. **6****.** The dummy control circuit **602** of FIG. **12** comprises a normal control signal storing circuit **800** and a dummy control signal generating circuit **801.** The normal control signal storing circuit **800** stores normal control signal history information **802** based on the normal control signals **604** to **609** output by the normal control circuit **601.** The dummy control signal generating circuit **801** reads out the normal control signal history information **802** stored in the normal control signal storing circuit **800** and generates and outputs the dummy control signals **610** to **615.**

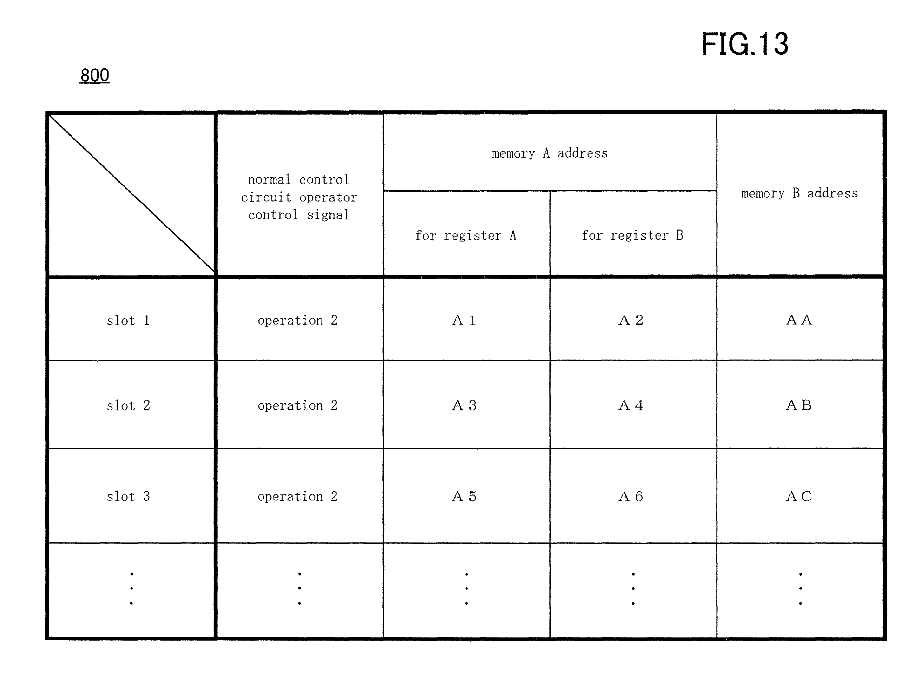

FIG. **13** shows exemplary contents stored in the normal control signal storing circuit **800** of FIG. **12****.** As shown in FIG. **13****,** the normal control signal storing circuit **800** comprises a plurality of data storing slots thereinside. Each slot stores a set of the normal control circuit operator control signal **607** output by the normal control circuit **601,** a memory A address (for the register A) obtained from the normal control circuit memory A control signal **604** and the normal control circuit register A control signal **605,** a memory A address (for the register B) obtained from the normal control circuit memory A control signal **604** and the normal control circuit register B control signal **606,** and a memory B address obtained from the normal control circuit memory B control signal **609.**

The dummy control signal generating circuit **801** reads out the normal control signal history information **802** stored in these slots and generates the dummy control signals **610** to **615.** An algorithm to determine from which slot the dummy control signal generating circuit **801** reads out data may be any of (1) reading out data in order in which the data has been stored, (2) selecting a slot having a most frequent cryptographic operation instruction, (3) randomly selecting a slot, and the like.

When read is performed using an algorithm as described above, operations of the operation resources **103** to **108** performed in the past, operations of the operation resources **103** to **108** having a consumed current waveform having a high frequency of occurrence in the past, and operations of the operation resources **103** to **108** in which past states of a consumed current waveform appear randomly, can be performed even in clock cycle units, so that a consumed current in a cryptographic operation instruction or the dummy operation instruction **113** becomes uniform, resulting in a further improvement in security against current analysis.

Also, the normal control signal storing circuit **800** may be comprised of a non-volatile memory. In this case, past normal control signal history information **802** can be stored after power-off, and the dummy control signals **610** to **615** are selected from the stored normal control signals **604** to **609** and are output. Therefore, even in the case of a current analysis technique in which, for example, a sequence of power-on, execution of a cryptographic operation, and power-off is repeatedly performed to observe changes in current waveform, a consumed current waveform during the execution of the cryptographic operation instruction **111** or the execution of the dummy operation instruction **113** appears, depending on the stored past normal control signals **604** to **609,** resulting in a further improvement in security against current analysis.

When the same process is performed in the operator **105,** a consumed current in the operator **105** significantly depends on input data to be operated. Specifically, a difference in consumed current occurs between when the input data has a large number of bit values of 0 and when the input data has a small number of bit values of 0. Therefore, in the following example, security against current analysis is improved by using the number of counts of a bit value of 0.

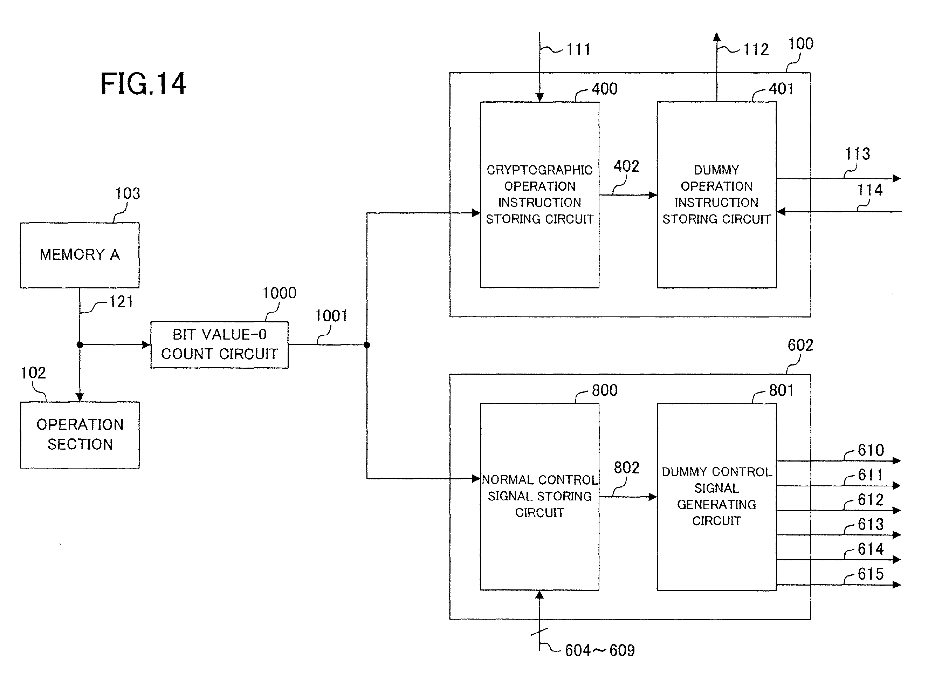

FIG. **14** shows a variation of the cryptographic operation processing circuit of FIG. **1****.** In FIG. **14****,** a bit value-0 count circuit **1000** is further provided in addition to the components of the cryptographic operation processing circuit of FIG. **1****.** The bit value-0 count circuit **1000** receives a value of the memory A output data **121,** counts the number of bits having a bit value of 0 in the input data, and outputs the result as bit value-0 count information **1001** to the cryptographic operation instruction storing circuit **400** and the normal control signal storing circuit **800.**

For example, if the memory A output data **121** has a data width of 32 bits and outputs data of 39DF7EB6 in hexadecimal, the data is 0011_1001_1101_1111_0111_1110_1011_0110 in binary, so that the number of bits having a bit value of 0 is 10. Therefore, the bit value-0 count information **1001** outputs 10.

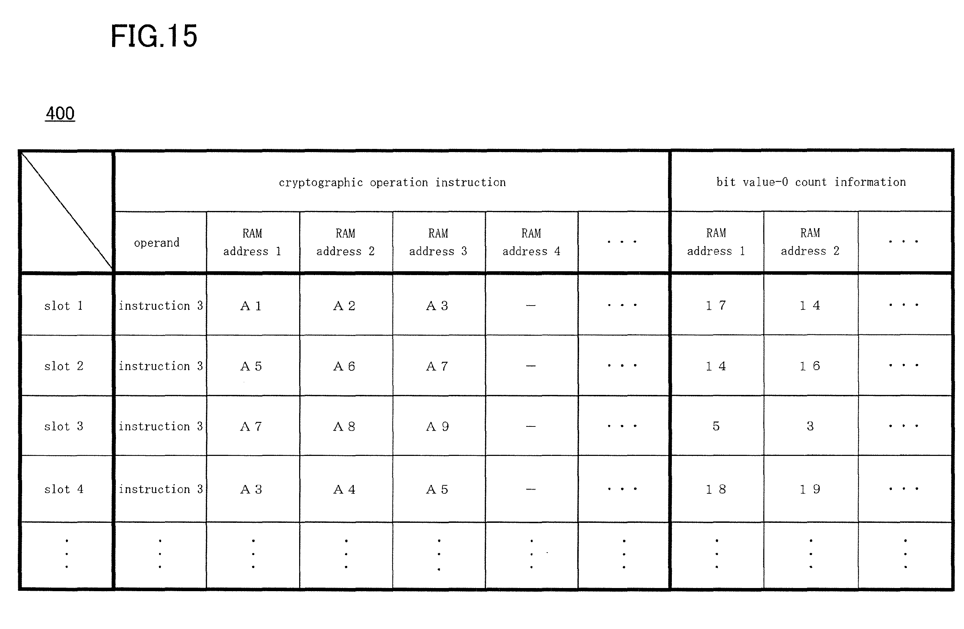

FIG. **15** shows exemplary contents stored in the cryptographic operation instruction storing circuit **400** of FIG. **14****.** As shown in FIG. **15****,** the cryptographic operation instruction storing circuit **400** further stores the bit value-0 count information **1001** as well as the cryptographic operation instruction **111** in the same slot. It is here assumed that data stored later is stored in a slot having a smaller slot number.

It is assumed that the memory A output data **121** has a data width of 32 bits. In this case, by the cryptographic operation instruction **111** stored in slot 1 of FIG. **15****,** an operation of instruction 3 where data at each of address A1 and address A2 is input is performed, and the result is stored at address A3. In this case, the bit value-0 count information **1001** counted by the bit value-0 count circuit **1000** is 17 at address A1 and 14 at address A2.

By the cryptographic operation instruction **111** stored in slot 2, an operation of instruction 3 where data at each of address A5 and address A6 is input is performed, and the result is stored at address A7. In this case, the bit value-0 count information **1001** counted by the bit value-0 count circuit **1000** is 14 at address A5 and 16 at address A6.

By the cryptographic operation instruction **111** stored in slot 3, an operation of instruction 3 where data at each of address A7 and address A8 is input is performed, and the result is stored at address A9. In this case, the bit value-0 count information **1001** counted by the bit value-0 count circuit **1000** is 5 at address A7 and 3 at address A8. In other words, both data read out from address A7 and data read out from address A8 have a small number of counts of a bit value of 0 in the 32-bit data width.

By the cryptographic operation instruction **111** stored in slot 4, an operation of instruction 3 where data at each of address A3 and address A4 is input is performed, and the result is stored at address A5. In this case, the bit value-0 count information **1001** counted by the bit value-0 count circuit **1000** is 18 at address A3 and 19 at address A4.

All the cryptographic operation instructions **111** stored in the slots are an instruction that issues instruction 3 to the operator **105.** The number of counts of a value of 0 stored in each slot is small in slot 3 and is similar in slot 1, slot 2, and slot 4. If data having a considerably small or large number of counts of a value of 0 for the data width exists, the number of bits to be activated is considerably small in a cryptographic operation employing such data, so that a characteristic peak occurs in a consumed current waveform during a cryptographic operation process.

The dummy operation instruction generating circuit **401** receives the operation completion signal **114** that is a signal indicating that the execution of the cryptographic operation instruction **111** has been ended, and scans the cryptographic operation instructions **111** stored in slot 1 to slot 4. When recognizing that all the slots have instruction 3, the dummy operation instruction generating circuit **401** further scans the bit value-0 count information **1001.** If data having a considerably small or large number of counts of a value of 0 for the data width exists, an operation employing such data has a considerably small number of bits to be activated, so that a characteristic peak occurs in a consumed current waveform during a cryptographic operation process. Therefore, the dummy operation instruction **113** is generated so as to intentionally increase the number of such peaks. Thereby, slot 3 that is a slot having a smallest bit value-0 count number is selected to generate the dummy operation instruction **113.**

As described above, in the cryptographic operation processing circuit having the configuration of FIG. **14****,** the dummy operation instruction generating circuit **401** determines a distribution of bit value-0 count numbers stored in the cryptographic operation instruction storing circuit **400,** and selects the cryptographic operation instruction **111** employing a largest or smallest bit value-0 count number to generate the dummy operation instruction **113.** Therefore, the generated dummy operation instruction **113** can indicate a specific past consumed current waveform, so that it is difficult to distinguish the execution of a cryptographic operation instruction **111** from the execution of a cryptographic operation instruction **111** indicating a specific past consumed current waveform as the dummy operation instruction **113,** resulting in a further improvement in security against current analysis.

Note that the dummy operation instruction generating circuit **401** may determine a distribution of bit value-0 count numbers stored in the cryptographic operation instruction storing circuit **400,** and selects a cryptographic operation instruction **111** employing an average bit value-0 count number to generate the dummy operation instruction **113.** Since a cryptographic operation instruction **111** employing an average bit value-0 count number is selected to generate the dummy operation instruction **113,** the generated dummy operation instruction **113** can indicate an average consumed current waveform, so that it is difficult to distinguish the execution of a cryptographic operation instruction **111** from the execution of a cryptographic operation instruction **111** having a frequent bit value-0 count number in data as the dummy operation instruction 113, resulting in a further improvement in security against current analysis.

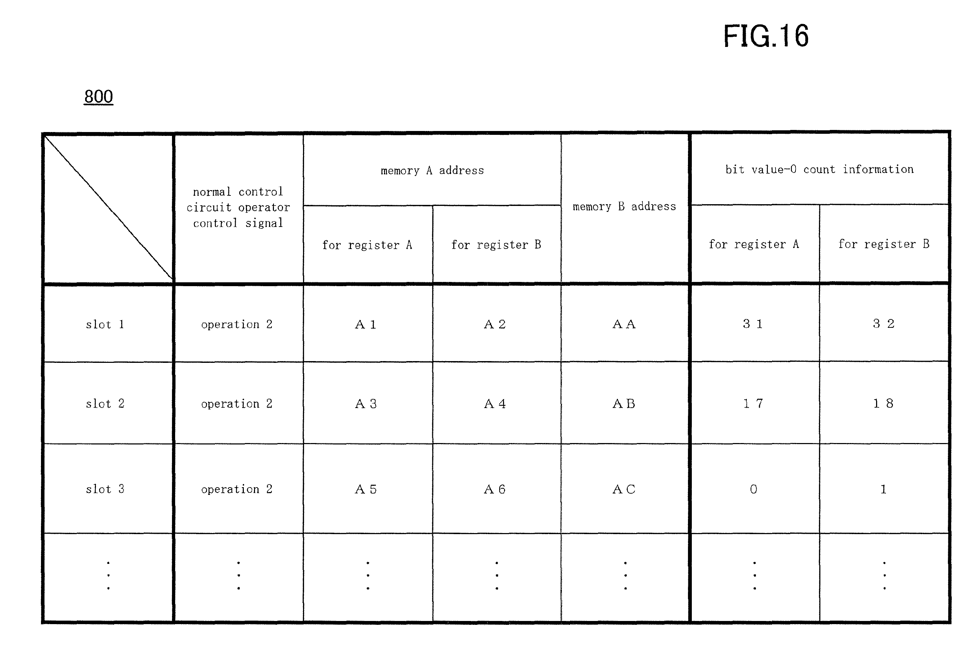

FIG. **16** indicates exemplary contents stored in the normal control signal storing circuit **800** of FIG. **14****.** As shown in FIG. **16****,** the normal control signal storing circuit **800** is configured to store a set of the normal control circuit operator control signal **607,** the memory A address and the memory B address and, in addition, the bit value-0 count information **1001.** It is here assumed that data stored later is stored in a slot having a smaller slot number.

It is assumed that the memory A output data **121** has a data width of 32 bits. According to slot 1 of FIG. **16****,** operation 2 is issued as the normal control circuit operator control signal **607** with respect to data read out from a memory A address (for the register A) A1 and a memory A address (for the register B) A2, and a result of the operation is written into a memory B address AA. In this case, bit value-0 count information **1001** for the register A and bit value-0 count information **1001** for the register B that are counted by the bit value-0 count circuit **1000** are 31 and 32, respectively. In other words, they are data having a considerably large number of counts of a bit value of 0 for the 32-bit data width.

Also, conversely, in the data stored in slot 3 of FIG. **16****,** bit value-0 count information **1001** for the register A and bit value-0 count information **1001** for the register B that are counted by the bit value-0 count circuit **1000** are 0 and 1, respectively. They are data having a considerably small number of counts of a bit value of 0 for the 32-bit data width.

As described above, when data having a considerably small or large value-0 count number for the data width exists, a cryptographic operation employing such data has a considerably small number of bits to be activated, so that a characteristic peak occurs in a consumed current waveform during a cryptographic operation process.

Data stored in slot 1 is the latest data, and therefore, the normal control circuit **601** recently outputs the normal control signals **604** to **609** in which a characteristic peak as described above occurs. In such a case, the following dummy control signals **610** to **615** cannot be effectively deceptive unless they are a control signal in which a similar characteristic peak occurs. Also, conversely, when the normal control circuit **601** outputs the normal control signals **604** to **609** in which a characteristic peak as described above does not occur are output, the following dummy control signals **610** to **615** cannot be effectively deceptive unless they are a control signal in which a characteristic peak does not occur. Therefore, the dummy control signal generating circuit **801** determines bit value-0 count information **1001** in slots that have been stored at the latest, and reads out data in a slot having, for example, average, largest or smallest bit value-0 count information **1001** and generates the dummy control signals **610** to **615.**

By performing such a dummy operation, it is difficult to distinguish a consumed current waveform during the execution of an original cryptographic operation from that during the dummy operation, so that the timing of the original cryptographic operation is not likely to be analyzed.

As described above, in the cryptographic operation processing circuit having the configuration of FIG. **14****,** the number of bit values of 0 in the memory A output data **121** is counted by the bit value-0 count circuit **1000,** and the count value is stored into the cryptographic operation instruction storing circuit **400** and the normal control signal storing circuit **800,** so that a consumed current waveform having the same characteristic as that of a specific consumed current waveform occurring in the past or an average consumed current waveform can be reproduced. Therefore, it is difficult to distinguish a cryptographic operation process from a dummy operation process by consumed current analysis, resulting in an improvement in security against consumed current analysis.

In successive controls of the operator **105,** even if values of input data read out from different addresses in the memory A **103** are completely the same, a current is not consumed in the operator **105.** Therefore, in the following example, security against current analysis is improved by presetting a potential of a circuit included in the operator **105.**

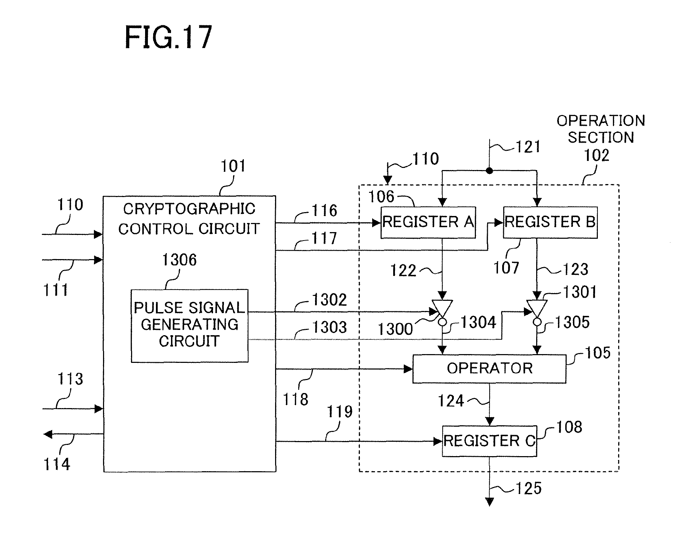

FIG. **17** shows a configuration of the cryptographic control circuit **101** and the operation section **102** according to a variation of FIG. **6****.** The operation section **102** of FIG. **17** further comprises, in addition to the components of the operation section **102** of FIG. **1****,** a preset circuit A **1300** and a preset circuit B **1301** so as to preset a potential of a circuit included in the operator **105.** In the example of FIG. **17****,** both the preset circuits **1300** and **1301** are, for example, inverter circuits. Also, the cryptographic control circuit **101** of FIG. **17** further comprises, in addition to the components of the cryptographic control circuit **101** of FIG. **6****,** a pulse signal generating circuit **1306** for generating a pulse signal synchronous with an operation start clock edge so as to operate both the preset circuits **1300** and **1301.**

The preset circuit A **1300,** when a preset circuit A control signal **1302** from the pulse signal generating circuit **1306** becomes effective, inverts the register A output data **122** from the register A **106** and outputs the result as preset circuit A output data **1304** to the operator **105.**

The preset circuit B **1301,** when a preset circuit B control signal **1303** from the pulse signal generating circuit **1306** becomes effective, inverts the register B output data **123** from the register B **107** and outputs the result as a preset circuit B output data **1305** to the operator **105.**

The pulse signal generating circuit **1306** is a circuit for generating a pulse signal using the clock **110.** The generated signal is output as the preset circuit A control signal **1302** and the preset circuit B control signal **1303** to the preset circuit A **1300** and the preset circuit B **1301.**

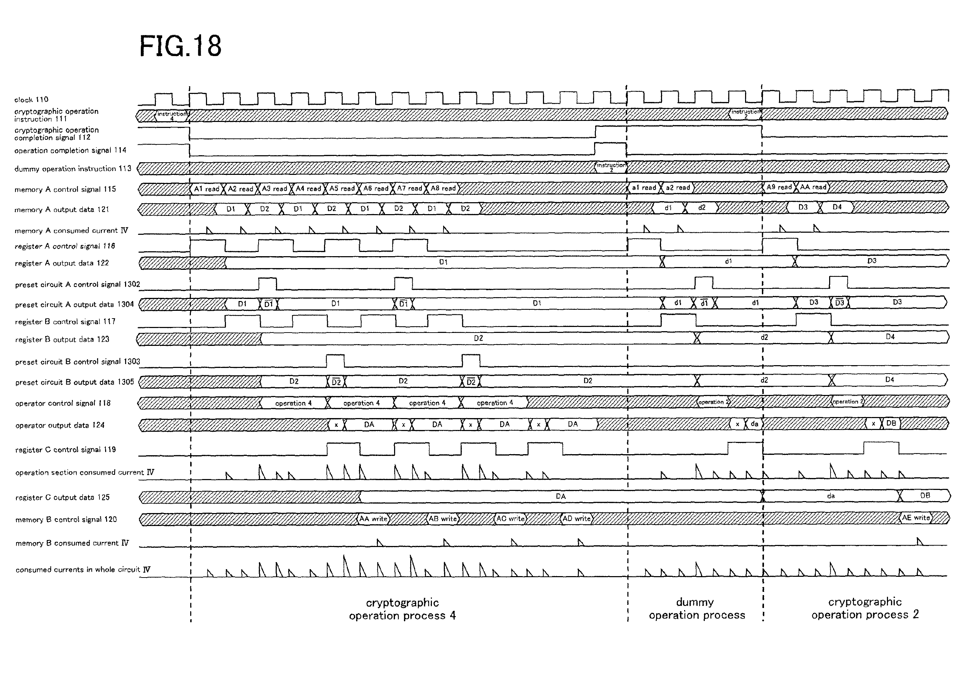

FIG. **18** shows an operation of a cryptographic operation processing circuit comprising the cryptographic control circuit **101** and the operation section **102** of FIG. **17****.**

In FIG. **18****,** the cryptographic control circuit **101** receives instruction 4 by the cryptographic operation instruction **111** from the CPU **109.** It is here assumed that instruction 4 causes the operator **105** to execute operation 4 of two clock cycles four times in a series of cryptographic operation processes.

The cryptographic control circuit **101** decodes instruction 4, reads out data D1 and data D2 from address A1 to address A8 of the memory A **103,** and stores data D1 into the register A **106** and data D2 into the register B **107.** A memory A consumed current IV is a consumed current caused by a read operation being performed by the memory A **103,** and has a consumed current waveform corresponding to a read operation from address A1 to address A8.

The cryptographic control circuit **101** instructs the operator **105** to execute operation 4 by the operator control signal **118.** In this case, the pulse signal generating circuit **1306** controls the preset circuit A control signal **1302** to temporarily invert the register A output data **122** and output the result to the preset circuit A output data **1304.** Thereby, the operator **105** temporarily executes an operation of data obtained by inverting D1, and D2 before performing an operation of the original data D1, and D2. An operation section consumed current IV is changed every time data is stored into the register A **106** and the register B **107** that are input registers for the operator **105** (combinational circuit), and even after values in the register A **106** and the register B **107** are settled, an operation is executed and a current is therefore consumed for two clock cycles.

When the memory A output data **121** read out from address A1 to address A8 is a succession of D1 and D2 as shown in FIG. **18****,** the values in the register A output data **122** and the register B output data **123** are not changed. In such a case, in conventional configurations, the input of the operator **105** is not changed, and the operator 105 is not actually operated, so that a current is not consumed. In the present invention, the preset circuit A **1300** and the preset circuit B **1301** are controlled by the pulse signal generating circuit **1306** so that input data is temporarily inverted, whereby an operation process is executed, so that the operator **105** consumes a current.

Next, the cryptographic control circuit **101** decodes instruction 4 to output the register C control signal **119** for storing an operation result into the register C **108** with timing when operation 4 is ended, so that DA is stored into the register C **108.** Also, the cryptographic control circuit **101** decodes instruction 4 to issue the memory B control signal **120,** so that DA (register C output data **125)** is stored into address AA to address AD of the memory B **104.** A memory B consumed current IV is a consumed current caused by a write operation to the memory B **104,** and has a consumed current waveform corresponding to a write operation to address AA to address AD.

As described above, with the configuration of FIG. **17****,** the pulse signal generating circuit **1306** controls the preset circuit A control signal **1302** and the preset circuit B control signal **1303** so that data to be input to the operator **105** is temporarily inverted. Therefore, even if input data to the operator **105** has the same value every clock cycle, a potential inside the operator **105** is forcedly changed every clock edge, so that a current is consumed, resulting in an improvement in security against current analysis.

Although an inverter circuit has been described as an example of the preset circuits **1300** and **1301** of FIG. **17****,** a circuit that resets each signal in the operation section **102** to a fixed value may be employed.

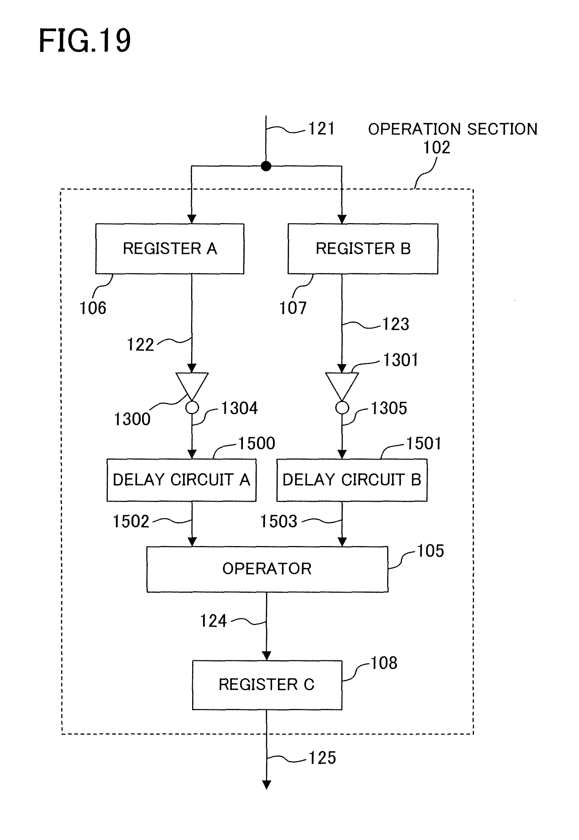

FIG. **19** shows a configuration of an operation section **102** according to a variation of FIG. **17****.** The operation section **102** of FIG. **19** further comprises, in addition to the components of the operation section **102** of FIG. **17****,** a delay circuit A **1500** and a delay circuit B **1501** for providing a delay value with respect to each bit of input data to the operator **105,** the delay values differing from each other. Note that control signals are not shown in FIG. **19****.**

The delay circuit A **1500** adds a delay amount to each bit of the preset circuit A output data **1304** from the preset circuit A **1300** every clock cycle, the delay amounts differing from each other, and outputs the resultant data in which not all the bits are changed with the same timing, as delay circuit A output data **1502,** to the operator **105.**

The delay circuit B **1501** adds a delay amount to each bit of the preset circuit B output data **1305** from the preset circuit B **1301,** the delay amounts differing from each other, and outputs the resultant data in which not all the bits are changed with the same timing, as delay circuit B output data **1503,** to the operator **105.**

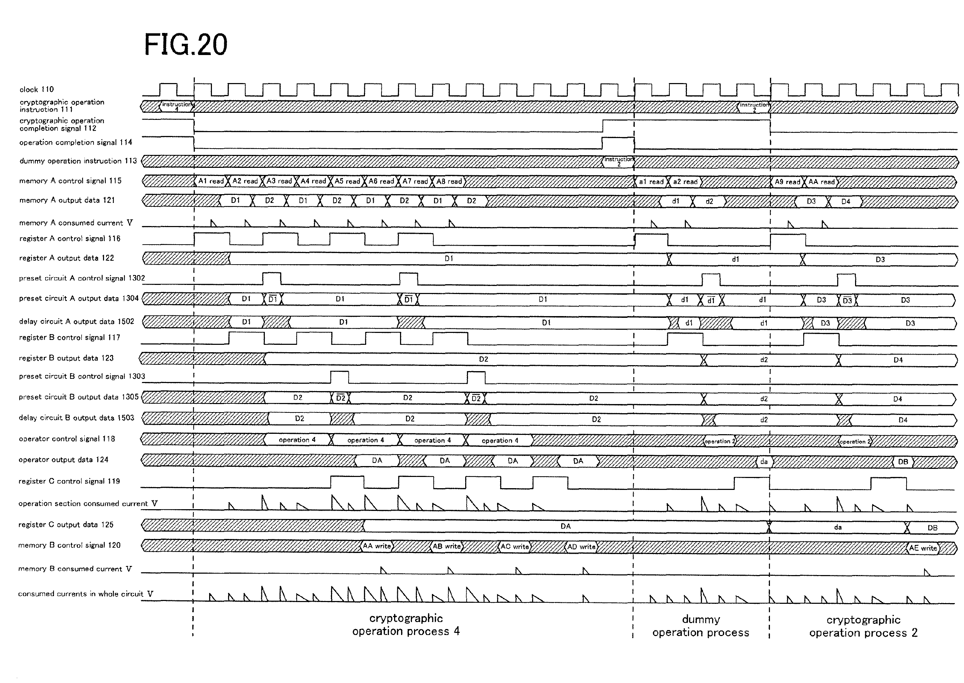

FIG. **20** shows an operation of a cryptographic operation processing circuit comprising the operation section **102** of FIG. **19****.** In FIG. **20****,** the cryptographic control circuit **101** receives instruction 4 by the cryptographic operation instruction **111** from the CPU **109.** It is here assumed that instruction 4 causes the operator **105** to execute operation 4 of two clock cycles four times in a series of cryptographic operation processes.

The cryptographic control circuit **101** decodes instruction 4, reads out data D1 and data D2 from address A1 to address A8 of the memory A **103,** and stores data D1 into the register A **106** and data D2 into the register B **107.** A memory A consumed current V is a consumed current caused by a read operation being performed by the memory A **103,** and has a consumed current waveform corresponding to a read operation from address A1 to address A8.

The cryptographic control circuit **101** instructs the operator **105** to execute operation 4 by the operator control signal **118.** In this case, the pulse signal generating circuit **1306** controls the preset circuit A control signal **1302** to temporarily invert the register A output data **122** and output the result to the preset circuit A output data **1304.** Further, the delay circuit A **1500** adds a delay amount to each bit of the preset circuit A output data **1304** every clock cycle, the delay amounts differing from each other, and outputs the resultant data in which not all the bits are changed with the same timing, as delay circuit A output data **1502.** Thereby, the operator **105** temporarily executes an operation of data obtained by inverting D1, and D2 before performing an operation of the original data D1, and D2. In addition, since the delay amount is changed every bit at a change point of data, the operator **105** executes an operation with respect to continuously differing data. An operation section consumed current V is changed every time data is stored into the register A **106** and the register B **107** that are input registers for the operator **105** (combinational circuit), and even after values in the register A **106** and the register B **107** are settled, an operation is executed and a current is therefore consumed for two clock cycles.

When the memory A output data **121** read out from address A1 to address A8 is a succession of D1 and D2 as shown in FIG. **20****,** the values in the register A output data **122** and register B output data **123** are not changed. In such a case, in conventional configurations, the input of the operator **105** is not changed, and the operator **105** is not actually operated, so that a current is not consumed. In the present invention, the preset circuit A **1300** and the preset circuit B **1301** are controlled by the pulse signal generating circuit **1306** so that input data is temporarily inverted, and further, a delay amount is added to each bit of the input data every clock cycle by the delay circuit A **1500** and the delay circuit B **1501,** the delay amounts differing from each other, thereby continuously changing the input data, so that the operator **105** can continuously execute an operation.

Next, the cryptographic control circuit **101** decodes instruction 4 to output the register C control signal **119** for storing an operation result into the register C **108** with timing when operation 4 is ended, so that DA is stored into the register C **108.** Also, the cryptographic control circuit **101** decodes instruction 4 to issue the memory B control signal **120,** so that DA (register C output data **125)** is stored into address AA to address AD of the memory B **104.** A memory B consumed current V is a consumed current caused by a write operation to the memory B **104,** and has a consumed current waveform corresponding to a write operation to address AA to address AD.

As described above, with the configuration of FIG. **19****,** the pulse signal generating circuit **1306** controls the preset circuit A control signal **1302** and the preset circuit B control signal **1303** so that data to be input to the operator **105** is temporarily inverted, and further, a delay amount is added to each bit of data to be input to the operator **105** every clock cycle by the delay circuit A **1500** and the delay circuit B **1501,** the delay amounts differing from each other. Thereby, a consumed current waveform in the operator **105** is affected by the delay of the input data, resulting in an improvement in security against consumed current analysis.

### INDUSTRIAL APPLICABILITY

As described above, the cryptographic operation processing circuit of the present invention is useful as a data processing circuit for which security, such as a cryptographic operation or the like, is required, and is applicable to IC cards and the like.

## Claims

1. A cryptographic operation processing circuit comprising:
a memory for storing data for a cryptographic operation;
an operator for operating the cryptographic operation data;
a register for temporarily storing input/output data of the operator;
a cryptographic control circuit for receiving a cryptographic operation instruction and controlling the memory, the operator and the register so as to perform a cryptographic process with respect to the cryptographic operation data; and
a dummy operation instruction circuit for receiving an operation completion signal indicating that execution of the cryptographic operation instruction has been ended, and issuing a dummy operation instruction for operating the memory, the operator and the register to the cryptographic control circuit.

2. The cryptographic operation processing circuit of claim 1, wherein
the dummy operation instruction circuit issues the same instruction as the cryptographic operation instruction, as the dummy operation instruction.

3. The cryptographic operation processing circuit of claim 1, wherein
the dummy operation instruction circuit includes:
a cryptographic operation instruction storing circuit for storing the cryptographic operation instruction; and
a dummy operation instruction generating circuit for generating the dummy operation instruction from a past cryptographic operation instruction history.

4. The cryptographic operation processing circuit of claim 3, wherein
the dummy operation instruction generating circuit selects a cryptographic operation instruction having a high frequency of occurrence from the cryptographic operation instruction history stored in the cryptographic operation instruction storing circuit to generate the dummy operation instruction.

5. The cryptographic operation processing circuit of claim 3, wherein
the dummy operation instruction generating circuit randomly selects a cryptographic operation instruction from the cryptographic operation instruction history stored in the cryptographic operation instruction storing circuit to generate the dummy operation instruction.

6. The cryptographic operation processing circuit of claim 3, wherein
the cryptographic operation instruction storing circuit includes a non-volatile memory, and holds a past cryptographic operation instruction history after power-off to generate the dummy operation instruction.

7. The cryptographic operation processing circuit of claim 3, wherein
the cryptographic control circuit includes:
a normal control circuit for generating a normal control signal for executing the cryptographic operation instruction or the dummy operation instruction;
an operation status notification circuit for indicating a period of time for which the normal control circuit does not need to occupy the memory, the operator or the register even when the cryptographic operation instruction or the dummy operation instruction is being executed;
a dummy control circuit for generating a dummy control signal for forcefully operating the memory, the operator or the register for a period of time for which the memory, the operator and the register are inactivated; and
a selector for switching the normal control signal and the dummy control signal, depending on a notification from the operation status notification circuit.

8. The cryptographic operation processing circuit of claim 7, wherein
the dummy control circuit includes:
a normal control signal storing circuit for storing an address of the memory output by the normal control circuit, and an operator control signal for controlling the operator; and
a dummy control signal generating circuit for generating the dummy control signal from a past normal control signal history.

9. The cryptographic operation processing circuit of claim 8, wherein
the dummy control signal generating circuit selects a normal control signal having a high frequency of occurrence from a normal control signal history stored in the normal control signal storing circuit to generate the dummy control signal.

10. The cryptographic operation processing circuit of claim 8, wherein
the dummy control signal generating circuit randomly selects a normal control signal from a normal control signal history stored in the normal control signal storing circuit to generate the dummy control signal.

11. The cryptographic operation processing circuit of claim 8, wherein
the normal control signal storing circuit includes a non-volatile memory, and holds a past normal control signal history after power-off to generate the dummy control signal.

12. The cryptographic operation processing circuit of claim 8, further comprising:
a bit value-0 count circuit for counting the number of bit values of 0 included in data read out from the memory,
wherein the cryptographic operation instruction storing circuit further has a function of storing a bit value-0 count number from the bit value-0 count circuit.

13. The cryptographic operation processing circuit of claim 12, wherein
the dummy operation instruction generating circuit determines a distribution of bit value-0 count numbers stored in the cryptographic operation instruction storing circuit, and selects a cryptographic operation instruction employing an average bit value-0 count number to generate the dummy operation instruction.

14. The cryptographic operation processing circuit of claim 12, wherein
the dummy operation instruction generating circuit determines a distribution of bit value-0 count numbers stored in the cryptographic operation instruction storing circuit, and selects a cryptographic operation instruction employing a largest or smallest bit value-0 count number to generate the dummy operation instruction.

15. The cryptographic operation processing circuit of claim 12, wherein
the normal control signal storing circuit further has a function of storing a bit value-0 count number from the bit value-0 count circuit.

16. The cryptographic operation processing circuit of claim 15, wherein
the dummy control signal generating circuit determines a distribution of bit value-0 count numbers stored in the normal control signal storing circuit, and selects a normal control signal employing an average bit value-0 count number to generate the dummy control signal.

17. The cryptographic operation processing circuit of claim 15, wherein
the dummy control signal generating circuit determines a distribution of bit value-0 count numbers stored in the normal control signal storing circuit, and selects a normal control signal employing a largest or smallest bit value-0 count number to generate the dummy control signal.

18. The cryptographic operation processing circuit of claim 7, further comprising:
a preset circuit for presetting a potential of a circuit included in the operator,
wherein the cryptographic control circuit further includes a pulse signal generating circuit for generating a pulse signal synchronous with an operation start clock edge of the operator to operate the preset circuit.

19. The cryptographic operation processing circuit of claim 18, wherein
the preset circuit inverts output data of the register only for a period of time of the pulse signal of the pulse signal generating circuit.

20. The cryptographic operation processing circuit of claim 18, further comprising:
a delay circuit for providing a delay value for each bit of input data to the operator, the delay values differing from each other.

## Amended claims

### Amended claims under Art. 19.1 PCT

1. (Canceled)

2. (Canceled)

3. (Amended) A cryptographic operation processing circuit comprising:
a memory for storing data for a cryptographic operation;
an operator for operating the cryptographic operation data;
a register for temporarily storing input/output data of the operator;
a cryptographic control circuit for receiving a cryptographic operation instruction and controlling the memory, the operator and the register so as to perform a cryptographic process with respect to the cryptographic operation data; and
a dummy operation instruction circuit for receiving an operation completion signal indicating that execution of the cryptographic operation instruction has been ended, and issuing a dummy operation instruction for operating the memory, the operator and the register to the cryptographic control circuit,
wherein the dummy operation instruction circuit includes:
a cryptographic operation instruction storing circuit for storing the cryptographic operation instruction; and
a dummy operation instruction generating circuit for generating the dummy operation instruction from a past cryptographic operation instruction history.

4. The cryptographic operation processing circuit of claim 3, wherein
the dummy operation instruction generating circuit selects a cryptographic operation instruction having a high frequency of occurrence from the cryptographic operation instruction history stored in the cryptographic operation instruction storing circuit to generate the dummy operation instruction.

5. The cryptographic operation processing circuit of claim 3, wherein
the dummy operation instruction generating circuit randomly selects a cryptographic operation instruction from the cryptographic operation instruction history stored in the cryptographic operation instruction storing circuit to generate the dummy operation instruction.

6. The cryptographic operation processing circuit of claim 3, wherein
the cryptographic operation instruction storing circuit includes a non-volatile memory, and holds a past cryptographic operation instruction history after power-off to generate the dummy operation instruction.

7. The cryptographic operation processing circuit of claim 3, wherein
the cryptographic control circuit includes:
a normal control circuit for generating a normal control signal for executing the cryptographic operation instruction or the dummy operation instruction;
an operation status notification circuit for indicating a period of time for which the normal control circuit does not need to occupy the memory, the operator or the register even when the cryptographic operation instruction or the dummy operation instruction is being executed;
a dummy control circuit for generating a dummy control signal for forcefully operating the memory, the operator or the register for a period of time for which the memory, the operator and the register are inactivated; and
a selector for switching the normal control signal and the dummy control signal, depending on a notification from the operation status notification circuit.

8. The cryptographic operation processing circuit of claim 7, wherein
the dummy control circuit includes:
a normal control signal storing circuit for storing an address of the memory output by the normal control circuit, and an operator control signal for controlling the operator; and
a dummy control signal generating circuit for generating the dummy control signal from a past normal control signal history.

9. The cryptographic operation processing circuit of claim 8, wherein
the dummy control signal generating circuit selects a normal control signal having a high frequency of occurrence from a normal control signal history stored in the normal control signal storing circuit to generate the dummy control signal.

10. The cryptographic operation processing circuit of claim 8, wherein
the dummy control signal generating circuit randomly selects a normal control signal from a normal control signal history stored in the normal control signal storing circuit to generate the dummy control signal.

11. The cryptographic operation processing circuit of claim 8, wherein
the normal control signal storing circuit includes a non-volatile memory, and holds a past normal control signal history after power-off to generate the dummy control signal.

12. The cryptographic operation processing circuit of claim 8, further comprising:
a bit value-0 count circuit for counting the number of bit values of 0 included in data read out from the memory,
wherein the cryptographic operation instruction storing circuit further has a function of storing a bit value-0 count number from the bit value-0 count circuit.

13. The cryptographic operation processing circuit of claim 12, wherein
the dummy operation instruction generating circuit determines a distribution of bit value-0 count numbers stored in the cryptographic operation instruction storing circuit, and selects a cryptographic operation instruction employing an average bit value-0 count number to generate the dummy operation instruction.

14. The cryptographic operation processing circuit of claim 12, wherein
the dummy operation instruction generating circuit determines a distribution of bit value-0 count numbers stored in the cryptographic operation instruction storing circuit, and selects a cryptographic operation instruction employing a largest or smallest bit value-0 count number to generate the dummy operation instruction.

15. The cryptographic operation processing circuit of claim 12, wherein
the normal control signal storing circuit further has a function of storing a bit value-0 count number from the bit value-0 count circuit.

16. The cryptographic operation processing circuit of claim 15, wherein
the dummy control signal generating circuit determines a distribution of bit value-0 count numbers stored in the normal control signal storing circuit, and selects a normal control signal employing an average bit value-0 count number to generate the dummy control signal.

17. The cryptographic operation processing circuit of claim 15, wherein
the dummy control signal generating circuit determines a distribution of bit value-0 count numbers stored in the normal control signal storing circuit, and selects a normal control signal employing a largest or smallest bit value-0 count number to generate the dummy control signal.

18. The cryptographic operation processing circuit of claim 7, further comprising:
a preset circuit for presetting a potential of a circuit included in the operator,
wherein the cryptographic control circuit further includes a pulse signal generating circuit for generating a pulse signal synchronous with an operation start clock edge of the operator to operate the preset circuit.

19. The cryptographic operation processing circuit of claim 18, wherein
the preset circuit inverts output data of the register only for a period of time of the pulse signal of the pulse signal generating circuit.

20. The cryptographic operation processing circuit of claim 18, further comprising:
a delay circuit for providing a delay value for each bit of input data to the operator, the delay values differing from each other.
